# EUROPEAN PATENT APPLICATION

(11) **EP 4 562 990 A1**
(43) Date of publication of application: **04.06.2025**
(21) Application number: 24208253.5
(22) Date of filing: 23.10.2024
(51) Int. Cl.: A01B 73/04

(54) **AGRICULTURAL IMPLEMENTS AND RELATED METHODS AND SYSTEMS**

(30) Priority: 30.11.2023 US 202363604338 P
(71) Applicant: Agco Corporation, Duluth, Georgia 30096 (US)
(72) Inventor: FIGGER, Robert, Hesston (US); BRINKER, Jarrett Lee, Hesston, 67062-0969 (US); FANSHIER, Benjamin Anson, Hesston, 67062-0969 (US); SCHMIDT, Michael Dennis, Maple Grove (US)
(74) Representative: AGCO Intellectual Property Department

(57) **Abstract**

An agricultural implement includes a frame including a center frame section, an intermediate frame section, and a wing frame section. A first actuator is operably coupled to the center frame section and the intermediate frame section, and a second actuator is operably coupled to the wing frame section and the intermediate frame section. A first sensor is configured to sense a position of the intermediate frame section relative to the center frame section, and a second sensor is configured to sense a position of the wing frame section relative to the intermediate frame section. A control system is configured to control the first actuator and the second actuator to adjust the position of the intermediate frame section based at least in part on the sensed position of the intermediate frame section relative to the center frame section. Related methods and control systems are also disclosed.

## Description

### CROSS-REFERENCE TO RELATED APPLICATION

### N/A

### FIELD

Embodiments of the present disclosure relate generally to machines and methods for working agricultural fields. More particularly, embodiments relate to agricultural implements (e.g., planters, tillage implements, etc.) and to methods of controlling such agricultural implements.

### BACKGROUND

Planting an agricultural field may be performed with a planter including an agricultural implement having planter row units configured to deposit seeds in trenches formed by discs or other mechanisms. The agricultural implement may be towed behind a primary vehicle, such as a tractor. The agricultural implement may include a frame section operably coupled to the tractor with a tow hitch.

Row units are typically spaced along a toolbar of a planter, which may include multiple sections. For example, a 3-section planter has a center section, a left wing section, and a right wing section, each having several ground-engaging row units. A 3-section planter may have a nominal working width from about 30 feet (9.1 m) to about 40 feet (12.2 m), but can be wider or narrower.

To transport such a planter along roads, it is helpful to fold the wing sections. For example, the left and right wing sections may each rotate upward from the center section, as depicted in U.S. Patent 11,229,152, "Ground-engaging Implement with Lateral Position Adjustment," granted January 25, 2022. As another example, the left and right wing sections may fold to be above the center section, as shown in U.S. Patent 8,807,236, "Agricultural Implement Incorporating Stack-fold Planter," granted August 19, 2014.

In addition, neighboring row units may be spaced from one another by at least a minimum distance to prevent the row units operably coupled to the wing sections from inadvertently contacting the row units operably coupled to the center section or from contacting the frame. Linkages and/or rephasing cylinders connect the sections of the planter together so that they fold or extend at the same time and at the same rate and facilitate synchronous folding of the wing sections to prevent the row units from inadvertently contacting one another and/or the frame.

### BRIEF SUMMARY

According to an aspect of the disclosure, an agricultural implement comprises a center frame section, an intermediate frame section pivotally coupled to a side of the center frame section, a wing frame section pivotally coupled to the intermediate frame section, a first actuator operably coupled to the center frame section and the intermediate frame section, a second actuator operably coupled to the wing frame section and the intermediate frame section, a first sensor configured to sense a position of the intermediate frame section relative to the center frame section, a second sensor configured to sense a position of the wing frame section relative to the intermediate frame section, and a control system configured to control the first actuator and the second actuator to adjust the position of the intermediate frame section based at least in part on the sensed position of the intermediate frame section relative to the center frame section.

The first sensor may comprise a rotary sensor configured to determine an angle between the center frame section and the intermediate frame section. In other embodiments, the first sensor comprises a linear displacement sensor configured to determine a position of the first actuator.

The control system may be configured to cause the second actuator to rotate the wing frame section after causing the first actuator to rotate the intermediate frame section relative to the center frame section.

The first actuator comprises a first hydraulic cylinder, and the second actuator comprises a second hydraulic cylinder.

In some aspects, the control system is configured to cause the second actuator to be displaced by a same percentage of a total displacement as the first actuator. The control system may be configured to maintain the wing frame section substantially parallel to the center frame section by causing the second actuator to rotate the wing frame section relative to the intermediate frame section.

In some embodiments, the control system is configured to independently control the first actuator and the second actuator.

The agricultural implement may further comprise a center toolbar operably coupled to the center frame section, and a wing toolbar operably coupled to the wing frame section. The intermediate frame section may not be operably coupled to a toolbar. The wing toolbar may be longer than the wing frame section.

In some aspects, the agricultural implement further comprises row units operably coupled to each of the center toolbar and the wing toolbar.

In some embodiments, the agricultural implement further comprises another intermediate frame section operably coupled to the center frame section, another wing frame section operably coupled to the another intermediate frame section, a third actuator operably coupled to the center frame section and the another intermediate frame section and configured to rotate the another intermediate frame section relative to the center frame section, and a fourth actuator operably coupled to the another intermediate frame section and the another wing frame section and configured to rotate the another wing frame section relative to the another intermediate frame section.

In some embodiments, a method of operating an agricultural implement comprises causing a first actuator to rotate an intermediate frame section relative to a center frame section, receiving an indication of a position of the intermediate frame section relative to the center frame section with a first sensor, receiving an indication of a position of a wing frame section relative to the intermediate frame section with a second sensor, and causing a second actuator to rotate the wing frame section relative to the intermediate frame based on the position of the intermediate frame section relative to the center frame section.

In some aspects, causing the second actuator to rotate the wing frame section relative to the intermediate frame comprises causing the second actuator to rotate the wing frame section to cause the wing frame section to be substantially parallel to the center frame section.

In some embodiments, receiving an indication of a position of the wing frame section relative to the intermediate frame section with the second sensor comprises receiving an indication of a linear displacement of a piston of the second actuator.

In some instances, causing a second actuator to rotate the wing frame section relative to the intermediate frame section based on the position of the intermediate frame section relative to the center frame section comprises causing the second actuator to be displaced by about a same percentage as the first actuator.

In some embodiments, causing a first actuator to rotate an intermediate frame section relative to a center frame section comprises causing the first actuator to rotate the intermediate frame section relative to the center frame section independently of the second actuator rotating the wing frame section.

In some embodiments, a control system for an agricultural implement comprises at least one processor, and at least one non-transitory computer-readable storage medium storing instructions thereon that, when executed by the at least one processor, cause the control system to cause a first actuator to rotate an intermediate frame section relative to a center frame section, receive, from a first sensor, an indication of a position of the intermediate frame section relative to the center frame section, receive, from a second sensor, an indication of a position of a wing frame section relative to the intermediate frame section, and cause a second actuator to rotate the wing frame section relative to the intermediate frame section based on the position of the intermediate frame section relative to the center frame section.

In some aspects, the instructions cause the control system to cause the second actuator to rotate the wing frame section relative to the intermediate frame section based on an angle between intermediate frame section and the center frame section.

In some embodiments, the instructions cause the control system to cause the second actuator to rotate the wing frame section at substantially the same rate as the first actuator rotates the intermediate frame section.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1A is a simplified perspective top-down view of a tractor pulling an agricultural implement;
FIG. 1B is a simplified perspective view of the agricultural implement of FIG. 1A in an extended configuration;
FIG. 1C is a simplified rear view of the agricultural implement of FIG. 1A in the extended configuration;
FIG. 1D is simplified rear view of the agricultural implement of FIG. 1A in the extended configuration when the agricultural implement is over non-level sloped and terraced ground;
FIG. 1E is a simplified perspective view of the agricultural implement of FIG. 1A in a folded configuration;
FIG. 1F is a simplified rear view of the agricultural implement of FIG. 1A in the folded configuration;
FIG. 2 is a simplified flow chart illustrating a method of operating an agricultural implement; and
FIG. 3 is a schematic of a computer-readable storage medium including processor-executable instructions configured to embody one or more of the methods of determining at least one flow condition within a flow channel of an agricultural machine.

### DETAILED DESCRIPTION

The illustrations presented herein are not actual views of any agricultural machine or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

From reading the following description it should be understood that the terms "longitudinal" and "transverse" are made in relation to a machine's (e.g., agricultural implement's) normal direction of travel. In other words, the term "longitudinal" equates to the fore-and-aft direction, whereas the term "transverse" equates to the crosswise direction, or left and right. Furthermore, the terms "axial" and "radial" are made in relation to a rotating body such as a shaft, wherein axial relates to a direction along the rotation axis and radial equates to a direction perpendicular to the rotation axis.

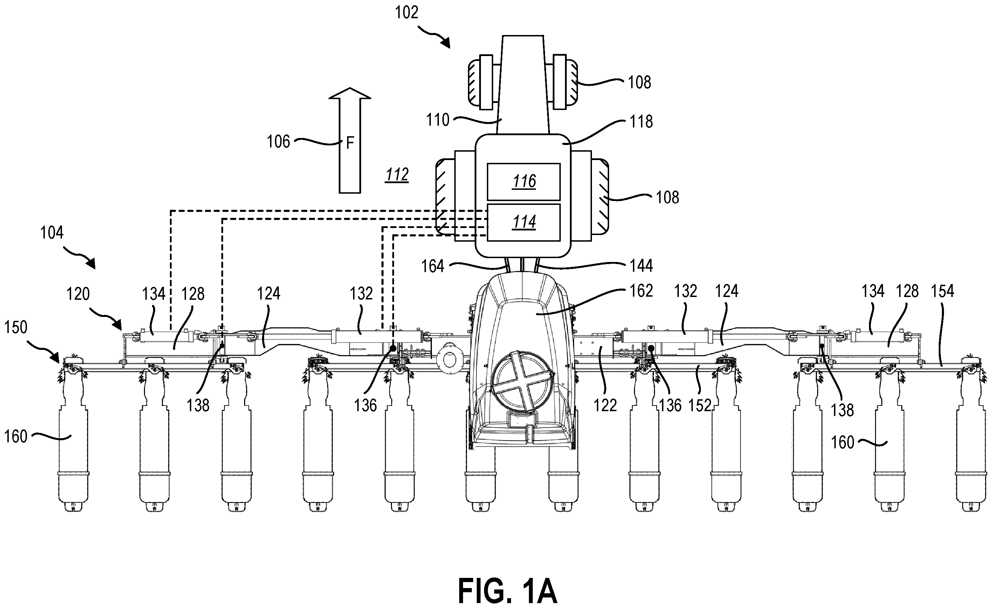

FIG. 1A is a simplified top view of a tractor 102 pulling (e.g., towing) an agricultural implement 104 (also referred to as an "implement") in a forward direction 106, the forward direction 106 being an intended direction of travel of the agricultural implement 104 while being pulled by the tractor 102. The tractor 102 includes wheels 108, an engine, and a chassis 110 supported by the wheels 108 that contact a surface of the ground 112. The agricultural implement 104 includes a frame 120 carrying a toolbar 150 and row units 160 connected to the toolbar 150. The row units 160 may be attached to the toolbar 150 and carried by the toolbar 150.

A control system 114, which may include a central processing unit ("CPU"), memory, implement controller, and one or more input/output (I/O) devices 116 (e.g., a graphical user interface ("GUI") (e.g., a touch-screen interface)), is typically located in an operator cabin 118 of the tractor 102. The control system 114 may be configured to communicate with the agricultural implement 104, such as by wired or wireless communication. Various control components (e.g., a first actuator 132, a second actuator 134, a first sensor 136, and a second sensor 138) may communicate with the control system 114 and control various aspects of the agricultural implement 104. For clarity and ease of understanding the description, FIG. 1A illustrates only one of each of the first actuator 132, the second actuator 134, the first sensor 136, and the second sensor 138 in communication with the control system 114; however, each of the first actuators 132, the second actuators 134, the first sensors 136, and the second sensors 138 may be in communication with the control system 114. In some embodiments, the I/O device 116 is configured to receive a user input, such as from an operator of the tractor 102 and/or the agricultural implement 104. For example, the user input may be a command to fold the agricultural implement 104 (e.g., such as for transport of the agricultural implement 104) and/or to extend the agricultural implement 104 (such as for a planting operation). In addition, the I/O device 116 may be configured to receive user input indicative of a predetermined setpoint of the frame 120 and/or toolbar 150.

Each of the row units 160 may be in operable communication with a central hopper 162 containing seed to be planted and/or fertilizer to be applied. That is, the row units 160 may be planter and/or fertilizer row units. The frame 120 of the agricultural implement 104 is connected to the tractor 102 by a tow hitch 164 (only a portion of which is illustrated in the view of FIG. 1A), which may comprise, for example, a 3-point hitch. In some embodiments, a height of the toolbar 150 may be controlled by the tow hitch 164, as shown in U.S. Patent Application Publication 2021/0315147, "Systems comprising agricultural implements connected to lifting hitches and related control systems and methods," published October 14, 2021.

The agricultural implement 104 may optionally be supported in the field by the row units 160, such as at least center row units 160 connected to a center frame section 122 of the frame 120. For example, the row units 160 may each include a trench opening assembly (or "opening wheels") at a front thereof and a trench closing assembly (or "closing wheels") at a rear thereof. In use and operation, the trench opening assemblies and the trench closing assemblies may contact the ground 112. In some embodiments, the agricultural implement 104 is supported by one or more wheels operably coupled to the frame 120.

The row units 160 may be any type of ground-engaging device for planting, seeding, fertilizing, tilling, or otherwise working crops for soil, typically in rows, and may be substantially similar to the row units described in International Patent Publication WO 2021/205245 A1, "Agricultural Implements Having Row Unit Position Sensors and at Least One Adjustable Wheel, and Related Control Systems and Methods," published October 14, 2021.

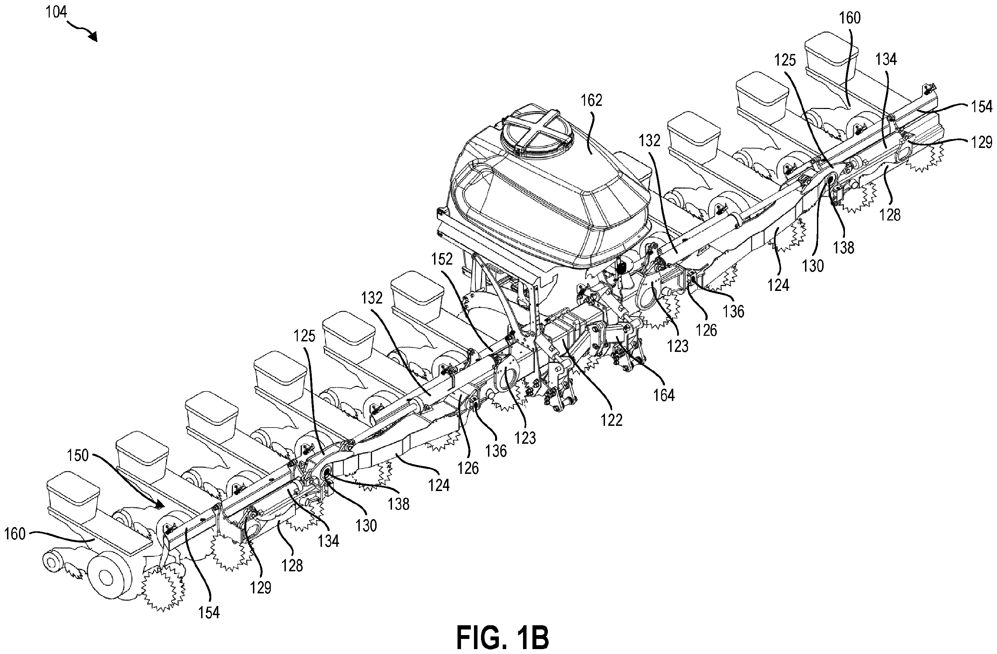

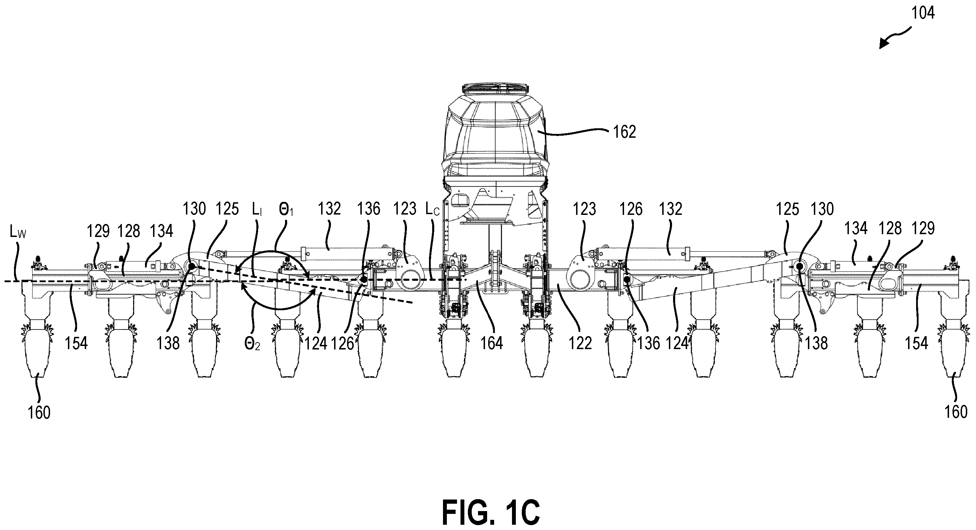

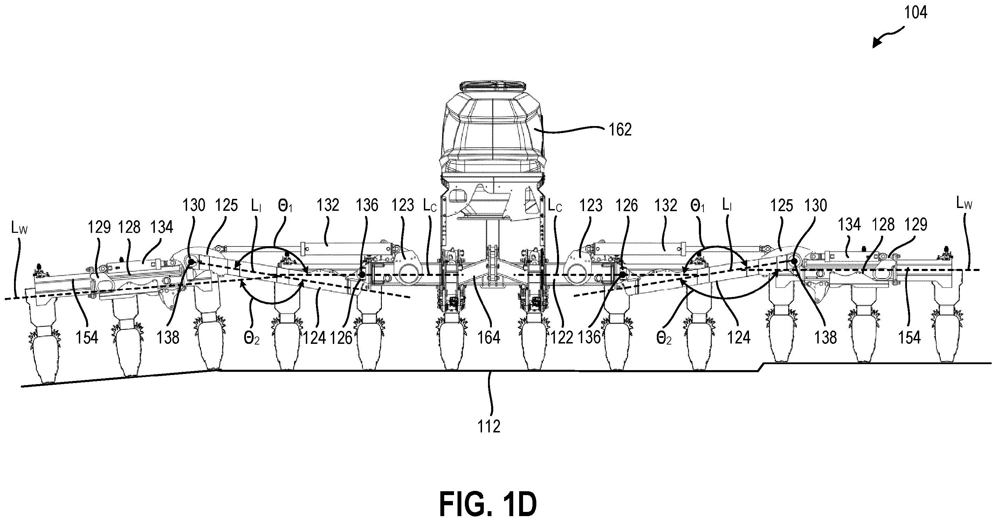

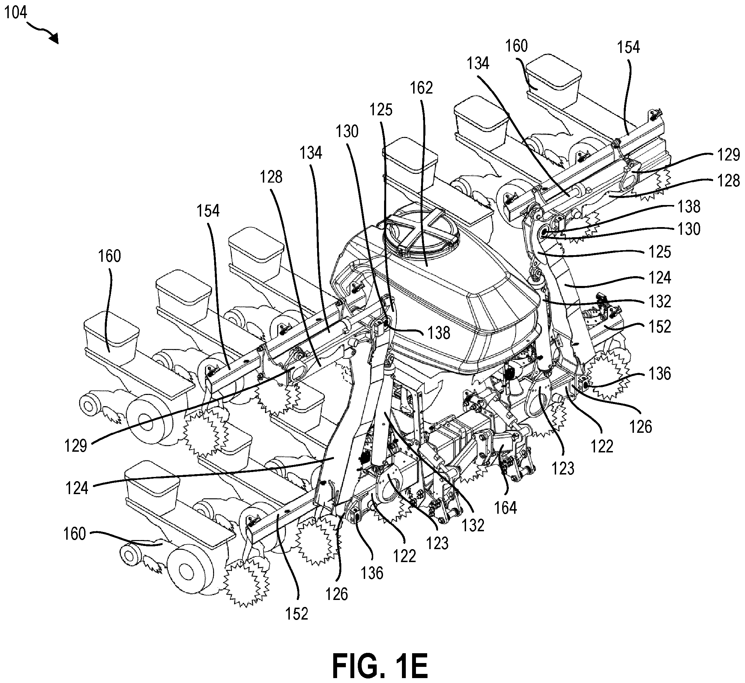

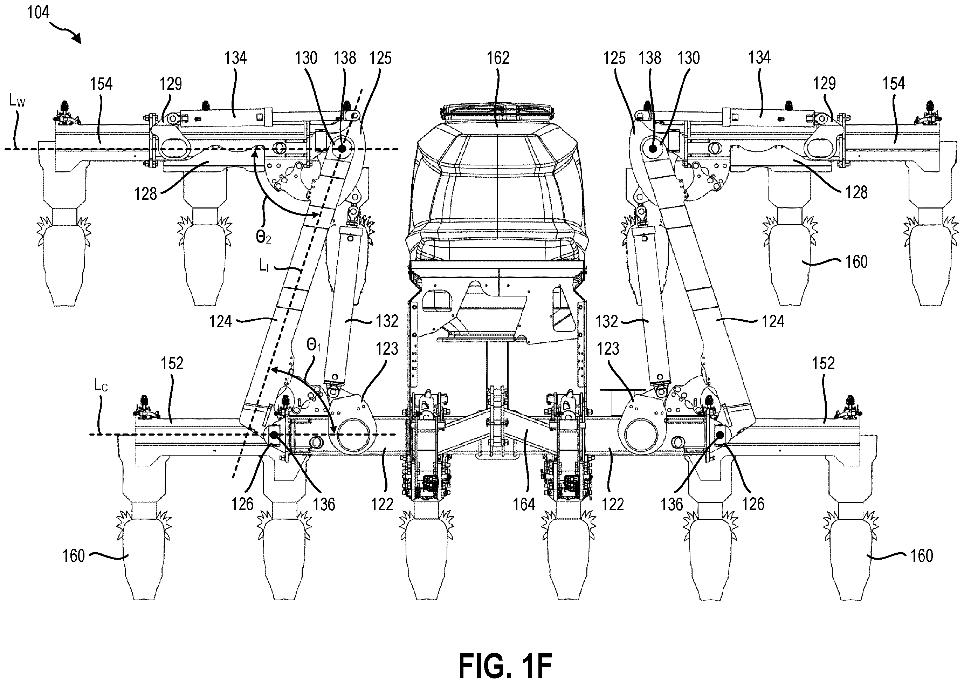

In FIG. 1A, the frame 120 and the toolbar 150 are in an extended orientation. The frame 120 and the toolbar 150 may be in an extended configuration while performing an agricultural operation (e.g., a planting or fertilization operation) with the agricultural implement 104. FIG. 1B and FIG. 1C are a respective simplified perspective view and rear view of the agricultural implement 104 in which the frame 120 and the toolbar 150 are in the extended configuration and on level ground; FIG. 1D is a simplified rear view of the agricultural implement 104 in which the frame 120 and the toolbar 150 are in the extended configuration and over sloped and terraced ground; and FIG. 1E and FIG. 1F are a respective simplified perspective view and rear view of the agricultural implement 104 in which the frame 120 and the toolbar 150 are in a folded (or retracted) configuration.

With collective reference to FIG. 1A through FIG. 1F, the frame 120 includes a center frame section 122 to which the tow hitch 164 and the central hopper 162 are operably coupled. Each lateral side of the center frame section 122 may be operably coupled to an intermediate frame section 124 at a first joint 126. Each intermediate frame section 124 may be operably coupled to a wing frame section 128 at a second joint 130. As described in additional detail herein, the first joint 126 and the second joint 130 may be configured to facilitate independent lifting of the frame 120 (e.g., of the wing frame section 128 and the intermediate frame section 124) and tilting of the wing frame section 128 with respect to the center frame section 122. As used herein, "tilting" of the frame 120 or the wing frame section 128 means adjusting a relative angle between the wing frame section 128 and the intermediate frame section 124 and adjusting a corresponding orientation of row units 160 operably coupled to a center toolbar 152 relative to an orientation of row units 160 operably coupled to a wing toolbar 154. For example, a 0° tilt may correspond to a relative angle of 0° between the wing frame section 128 and the intermediate frame section 124 (e.g., the wing frame section 128 being substantially parallel to the intermediate frame section 128 and the row units 160 of the center toolbar 152 being substantially co-linear with the row units 160 of the wing toolbar 154).

The toolbar 150 may include a center toolbar 152 operably coupled to the center frame section 122, and wing toolbars 154 operably coupled to the wing frame sections 128. In some embodiments, the toolbar 150 is not operably coupled to the intermediate frame section 124 and there are no row units 160 operably coupled to the intermediate frame section 124 (e.g., by means of a toolbar). In some embodiments, the center toolbar 152 is longer than the center frame section 122 and the wing toolbars 154 are longer than the wing frame sections 128. In some embodiments, the wing toolbars 154 are separated from (e.g., not directly connected to) the center toolbar 152.

A position of the center frame section 122 may be substantially fixed with respect to the position of the central hopper 162 and the tow hitch 164. In use and operation, the position of the center frame section 122 may be substantially fixed with respect to the tractor 102. As described in additional detail herein, the intermediate frame section 124 may be configured to rotate relative to the center frame section 122 about the first joint 126, and the wing frame section 128 may be configured to rotate relative to the intermediate frame section 124 about the second joint 130.

The first joint 126 may be configured to constrain relative motion between the intermediate frame section 124 and the center frame section 122 about a common axis (e.g., about the first joint 126 in and out of the page in the view of FIG. 1C); and the second joint 130 may be configured to constrain relative motion between the intermediate frame section 124 and the wing frame section 128 about a common axis (e.g., about the second joint 130 in and out of the page in the view of FIG. 1C). By way of non-limiting example, the first joint 126 and the second joint 130 may individually comprise a pin joint (e.g., a roller bearing) or a hinge joint.

As best seen in FIG. 1C and FIG. 1F, in some embodiments, a longitudinal axis Lc of the center frame section 122 may be substantially parallel to a longitudinal axis L_{W} of the wing frame section 128 when the frame 120 is in the extended configuration and on level ground 112 and when the frame 120 is in the folded configuration. In the extended configuration, and when the agricultural implement 104 is on substantially level ground 112, the wing frame section 128 (e.g., the longitudinal axis L_{w} of the wing frame section 128) may be substantially parallel to the center frame section 122 (e.g., to the longitudinal axis Lc of the center frame section 122) and to the ground 112. As described in additional detail herein, when the ground 112 contacted by the row units 160 operably coupled to the wing toolbar 154 is not level with the ground 112 contacted by the row units 160 operably coupled to the center toolbar 152, the wing frame section 128 may be oriented at an angle with respect to the center frame section 122.

With reference to FIG. 1C, FIG. 1D, and FIG. 1F, the intermediate frame section 124 may be oriented at an angle θ₁ relative to the center frame section 122; and the wing frame section 128 may be oriented at an angle θ₂ relative to the intermediate frame section 124. In the extended configuration, the angle θ₁ between the intermediate frame section 124 and the center frame section 122 may be other than parallel, such as between about 150° and about 170° (or between about 10° and about 30°). In some embodiments, such as where the agricultural implement 104 is on substantially level ground 112, the angle θ₂ between the wing frame section 128 and the intermediate frame section 124 may be substantially the same as the angle θ₁. In other embodiments, the angles θ₁ and θ₂ may be different when the wing frame section 128 is in an extended configuration, such as when the wing frame section 128 is over ground 112 that is not on the same plane (e.g., level with) the ground over which the center frame section 122 travels.

Rotation of the intermediate frame section 124 with respect to the center frame section 122 about the first joint 126 may cause the frame 120 (e.g., the wing frame section 128 and the intermediate frame section 124) to lift and/or lower (depending on the direction of rotation) with respect to the center frame section 122 and the ground 112. For example, rotation of the intermediate frame section 124 relative to the center frame section 122 may lift or lower the wing frame section 128 and the intermediate frame section 124. During transport operations, the wing frame section 128 may be lifted (e.g., raised) to place the frame 120 and the toolbar 150 in the folded configuration and to lift the coupled row units 160 from the ground 112.

In some embodiments, the wing frame section 128 and the intermediate frame section 124 may be lifted and/or lowered without tilting the wing frame section 128 relative to the intermediate frame section 124. Rotation of the first joint 126 may lift and lower the wing frame section 128 and cause the orientation of the wing frame section 128 relative to the ground 112 and the center frame section 122 to change while the longitudinal axis L_{w} of the wing frame section 128 remains in the same orientation with respect to the longitudinal axis Lₗ of the intermediate frame section 124 (as long as the wing frame section 128 is not concurrently rotated about the second joint 130).

The frame 120 may be lifted and/or lowered with a first actuator 132. In some embodiments, the first actuator 132 is fixedly coupled to each of the intermediate frame section 124 and the center frame section 122. The first actuator 132 may be operably coupled to the center frame section 122 at a first connector 123 and to the intermediate frame section 124 at a second connector 125. The first connector 123 may be fixedly coupled (e.g., attached) to the center frame section 122 and the second connector 125 may be fixedly coupled to (e.g., attached to or comprise a portion of) the intermediate frame section 124. In some embodiments, the second connector 125 is integral with the intermediate frame section 124. In some embodiments, when the frame 120 is in an extended configuration, the first actuator 132 may be in an extended configuration, and when the frame 120 is in a folded configuration, the first actuator 132 may be in a retracted configuration.

The first actuator 132 may include, for example, a hydraulic cylinder, an electric motor, a pneumatic actuator, or another type of actuator. In some embodiments, the first actuator 132 comprises a hydraulic cylinder. The first actuator 132 may be configured to rotate the intermediate frame section 124 relative to the center frame section 122 about the first joint 126 to lift the frame 120 (e.g., the intermediate frame section 124 and the wing frame section 128).

In some embodiments, the first actuator 132 may be configured to cause the angle θ₁ between the intermediate frame section 124 (e.g., the longitudinal axis Lₗ of the intermediate frame section 124) and the center frame section 122 (e.g., the longitudinal axis Lc of the center frame section 122) to change. For example, extension of the first actuator 132 (e.g., extending the piston out of the cylinder tube) may cause the angle θ₁ to increase and retraction of the first actuator 132 may cause the angle θ₁ to decrease.

In some embodiments, the first actuator 132 may be configured to cause the angle θ₁ between the center frame section 122 and the intermediate frame section 124 to change by up to at least about 60°, such as up to about least about 75°, up to about 90°, or even up to about 100° between the extended configuration and the retracted configuration. Of course, the disclosure is not so limited, and the amount that the first actuator 132 may cause the angle θ₁ to change may be different than that described.

With reference to FIG. 1B through FIG. 1F, rotation of the wing frame section 128 relative to the intermediate frame section 124 about the second joint 130 may change the angle Θz to tilt the wing frame section 128 with respect to the intermediate frame section 124. In addition, rotation of the wing frame section 128 relative to the intermediate frame section 124 may also change an angle between the wing frame section 128 and the center frame section 122. The wing frame section 128 may be tilted up or down based on the direction of rotation of the second joint 130. In some embodiments, the tilt of the wing frame section 128 may be independently adjusted relative to the lift of the frame 120 to contact unlevel ground with row units 160 operably coupled to the wing toolbar 154.

In some embodiments, the wing frame section 128 may be tilted with a second actuator 134. The second actuator 134 may be operably coupled to the wing frame section 128 at a third connector 129 and to the intermediate frame section 124 at the second connector 125. In some embodiments, the second actuator 134 is fixedly coupled to each of the intermediate frame section 124 and the wing frame section 128. The third connector 129 may be fixedly coupled (e.g., attached) to the wing frame section 128. In some embodiments, when the frame 120 is in an extended configuration, the second actuator 134 may be in a retracted configuration, and when the frame 120 is in a folded configuration, the second actuator 132 may be in an extended configuration. In some embodiments, the second actuator 134 may be configured to cause the angle θ₂ to change by up to at least about 45°, such as up to at least about 60°. However, the disclosure is not so limited, and the amount that the second actuator 134 may cause the angle θ₂ to change may be different than that described.

In some embodiments, the wing frame section 128 may be configured to be tilted downwards, such as when the wing frame section 128 is located over ground 112 that is relatively lower than the ground 112 over which the center frame section 122 is disposed; and the wing frame section 128 may be configured to be tilted upwards, such as when the wing frame section 128 is located over ground 112 that is relatively higher than the ground 112 over which the center frame section 122 is disposed. For example, the second actuator 134 may be extended to cause the wing frame section 128 to rotate downwards relative to the center frame section 122 and the second actuator 134 may be retracted to cause the wing frame section 128 to rotate upwards relative to the center frame section 122. For example, with reference to FIG. 1D, when the agricultural implement 104 is on sloped ground 112 and/or terraced ground 112, the longitudinal axis L_{W} of the wing frame section 128 may not be parallel to the longitudinal axis Lc of the center frame section 122 when the frame 120 is in the extended configuration. For example, when the agricultural implement 104 is on sloped ground 112 (e.g., such as illustrated on the left side of FIG. 1D), the wing frame section 128 may be tilted downwards relative to the intermediate frame section 124 such that the row units 160 operably coupled to the wing toolbar 154 contact ground 112 that is lower than the ground 112 over the center frame section 122 and the center toolbar 152. Similarly, if the slope of the ground 112 was in the opposite direction, the wing frame section 128 may be tilted upwards relative to the intermediate frame section 124 such that the row units 160 operably coupled to the wing toolbar 154 contact ground 112 that is higher than the ground 112 over the center frame section 122 and the center toolbar 152.

With continued reference to FIG. 1D, when the agricultural implement 104 is on terraced ground (e.g., such as illustrated on the right side of FIG. 1D), the wing frame section 128 may be tilted upwards relative to the intermediate frame section 124 such that the row units 160 operably coupled to the wing toolbar 154 contact ground 112 that is higher than the ground 112 over the center frame section 122 and the center toolbar 152. Similarly, if the terraced ground on the right side of FIG. 1D was lower than the ground 112 over the center frame section 122, the wing frame section 128 may be tilted downwards relative to the intermediate frame section 124 such that the row units 160 operably coupled to the wing toolbar 154 contact ground 112 that is lower than the ground 112 over the center frame section 122 and the center toolbar 152.

Each of the first actuator 132 and the second actuator 134 may be independently controlled to independently raise/lower the frame 120 and tilt the wing frame section 128, respectively. For example, during a planting operation, the wing frame section 128 may be tilted upwards or downwards relative to the center frame section 122 to follow the contour of the ground 112 without lifting the wing frame section 128. During a folding operation (e.g., prior to transporting the agricultural implement 104 to/from an agricultural field), the first actuator 132 may cause the frame 120 to be lifted and the second actuator 134 may cause the wing frame section 128 to remain substantially parallel to the center frame section 122 and/or may cause the wing frame section 128 to tilt without contacting row units 160 operably coupled to the center toolbar 152 with row units 160 operably coupled to the wing toolbar 154.

In some embodiments, each of the first actuator 132 and the second actuator 134 are individually coupled to separate hydraulic circuits independent of one another. In other words, the inlet pressure and the outlet pressure of each of the first actuator 132 and the second actuator 134 may be independently coupled to different hydraulic circuits, which may be controlled by the control system 114.

In some embodiments, a first sensor 136 may be operably coupled to the first joint 126, and a second sensor 138 may be operably coupled to the second joint 130. The first sensor 136 may be used to determine a lift of the frame 120 and may be configured to determine a position of the intermediate frame section 124 relative to the center frame section 122 (e.g., the angle θ₁ between the center frame section 122 and the intermediate frame section 124 and/or a degree of actuation of the first actuator 132); and the second sensor 138 may be used to determine a tilt of the wing frame section 128 and may be configured to determine a position of the wing frame section 128 relative to the intermediate frame section 124 (e.g., the corresponding angle θ₂ between the wing frame section 128 and the intermediate frame section 124 and/or a degree of actuation of the second actuator 134). In some embodiments, the sensors 136, 138 provide information (e.g., to the control system 114) that may be used to adjust the position of the wing frame section 128 relative to the center frame section 122, depending on the current lift of the frame 120 and the tilt of the wing frame section 128. In some embodiments, the sensors 136, 138 provide information to the control system 114 to independently adjust the lift of the frame 120 and the tilt of the wing frame section 128. Independently controlling the lift and the tilt of the wing frame section 128 may facilitate providing a closer spacing between neighboring row units 160 compared to other agricultural implements in which the wing toolbars are linked to the center toolbar (e.g., such as with rephasing cylinders and/or linkages) and/or provide clearance between neighboring row units 160 and the toolbar 150 while adjusting the lift and/or tilt.

In some embodiments, the first sensor 136 includes a rotary sensor configured to measure the rotation of first joint 126 (corresponding to the angle θ₁ between the center frame section 122 and the intermediate frame section 124) and may be connected to the first joint 126, such as at a pivot point of the intermediate frame section 124; and the second sensor 138 includes a rotary sensor configured to measure the rotation of the second joint 130 (corresponding to the angle θ₂ between the wing frame section 128 and the intermediate frame section 124) and may be connected to the second joint 130, such as a pivot point of the wing frame section 128.

In some embodiments, each of the first sensor 136 and the second sensor 138 individually include a rotary sensor (e.g., a rotary position sensor), such as a rotary potentiometer, a Hall-effect sensor, a rotary variable differential transducer (RVDT) sensor, or an inductive-based rotary sensor.

While the first sensor 136 and the second sensor 138 are depicted as being operably coupled to the respective first joint 126 and second joint 130, the disclosure is not so limited. In other embodiments, each of the first sensor 136 and the second sensor 138 may individually be operably coupled to the respective first actuator 132 and the second actuator 134 and configured to determine a displacement and/or a position of the first actuator 132 and the second actuator 134 (e.g., a position of the piston of each of the first actuator 132 and the second actuator 134). By way of non-limiting example, the first sensor 136 and the second sensor 138 may individually include a linear displacement transducer (LDT) sensor, a linear position sensor, a magnetoresistive linear displacement transducer, a linear variable differential transformer (LVDT), or another type of position sensor.

In other embodiments, the first sensor 136 and the second sensor 138 may individually be operably coupled to, for example, one or more of the center frame section 122, the intermediate frame section 124, and the wing frame section 128 and configured to determine a distance to another component of the frame 120 (e.g., another of the center frame section 122, the intermediate frame section 124, and the wing frame section 128). By way of non-limiting example, the first sensor 136 and the second sensor 138 may individually include a non-contact sensor, for example, an optical sensor, an ultrasonic transducer, an RF (radio frequency) sensor, lidar, radar, etc. Such sensors are described in, for example, U.S. Patent 10,874,042, "Seed Trench Depth Detection Systems," granted December 29, 2020.

In some embodiments, the control system 114 may be in operable communication with each of the first actuator 132, the second actuator 134, the first sensor 136, and the second sensor 138, such as by wired or wireless communication. For example, the control system 114 may be configured to receive sensor information from the first sensor 136 and the second sensor 138 indicative of the lift and tilt of the frame 120. The sensor information may include, for example, a rotation information of the first joint 126 and the second joint 130, a position of the respective pistons of the first actuator 132 and the second actuator 134, and/or a position (e.g., a distance) of one or more of the center frame section 122, the intermediate frame section 124, and the wing frame section 128 from the other of the center frame section 122, the intermediate frame section 124, and the wing frame section 128.

The control system 114 may be configured to provide control signals to each of the first actuator 132 and the second actuator 134 independently of one another to control a respective orientation of the frame 120 (e.g., a lift of the frame 120) and a tilt of the wing frame section 128, as shown by dashed lines in FIG. 1A. For example, responsive to receiving an input (e.g., such as from a user of the agricultural implement 104 at the I/O device 116), the control system 114 may be configured to provide control instructions to one or both of the first actuator 132 and the second actuator 134 to control an amount of the respective lift and/or tilt. In some embodiments, responsive to receiving a folding instruction at the I/O device 116, the control system 114 may cause the first actuator 132 to lift the frame 120, followed by causing the second actuator 134 to tilt the wing frame section 128 to keep the wing frame section 128 substantially parallel to the center frame section 122, as described in additional detail herein. In addition, responsive to receiving instructions at the I/O device 116 to extend the frame 120, the control system 114 may be configured to cause the first actuator 132 to lift the frame 120, followed by causing the second actuator 134 to tilt the wing frame section 128 to increase the angle θ₂ and maintain the wing frame section 128 substantially parallel to the center frame section 122 as the angle θ₁ changes during the lowering operation. In some embodiments, the control system 114 may be configured to cause the first actuator 132 and the second actuator 134 to cause the row units 160 operably coupled to the wing toolbars 154 to contact (e.g., engage) the ground 112 at substantially the same time. In some embodiments, the control system 114 is configured to synchronously stack the wing frame sections 128 above the center frame section 122 while maintaining the second angle θ₂ at the second joint 130 to be substantially the same as the first angle θ₁ at the first joint 126.

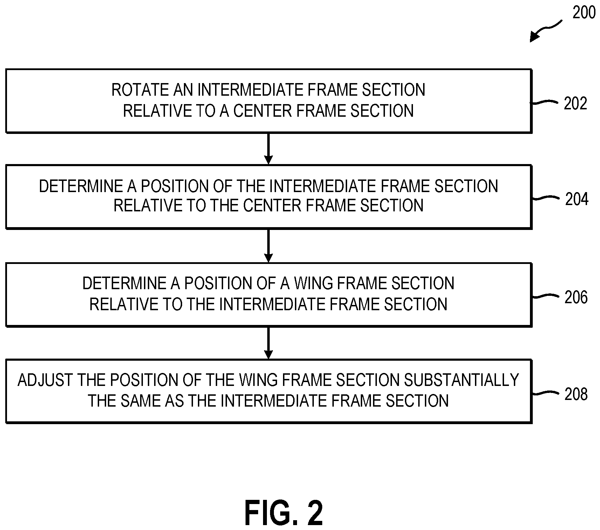

FIG. 2 is a simplified flow chart illustrating a method 200 of folding or extending the agricultural implement 104. The method 200 includes rotating the intermediate frame section 124 relative to the center frame section 122, as shown in act 202. Rotating the intermediate frame section 124 relative to the center frame section 122 may adjust the lift of the frame 120. Adjusting the lift of the frame 120 includes raising or lowering the frame 120, such as by actuating the first actuator 132 to adjust the angle θ₁ between the center frame section 122 and the intermediate frame section 124.

Responsive to rotating the intermediate frame section relative to the center frame section 122, the method 200 includes determining a position of the intermediate frame section 124 relative to the center frame section 122, as shown in act 204. Determining the relative position of the intermediate frame section 124 may include determining the angle θ₁ between the center frame section 122 and the intermediate frame section 124. For example, the angle θ₁ may be determined by sensing the angle θ₁ with the first sensor 136. In other embodiments, determining the position of the intermediate frame section 124 relative to the center frame section 122 includes sensing the position of the first actuator 132 with the first sensor 136 (e.g., determining the linear displacement of the first actuator 132). In some embodiments, determining the position of the intermediate frame section 124 relative to the center frame section 122 includes determining the lift of the frame 120.

Responsive to determining position of the intermediate frame section 124 relative to the center frame section 122, the method 200 further includes determining a position of the wing frame section 128 relative to the intermediate frame section 124, as shown in act 206. Determining the position of the wing frame section 128 relative to the intermediate frame section 124 may include sensing the angle Θz between the wing frame section 128 and the intermediate frame section 124. For example, the angle Θz may be determined by sensing the angle Θz with the second sensor 138. In other embodiments, determining the position of the wing frame section 128 relative to the intermediate frame section 124 includes sensing the position of the second actuator 134 with the second sensor 138 (e.g., determining the linear displacement of the second actuator 134). In some embodiments, determining the position of the wing frame section 128 relative to the intermediate frame section 124 includes determining the tilt of the wing frame section 128.

Responsive to determining the position of the wing frame section 128 relative to the intermediate frame section 124, the method 200 includes adjusting the position of the wing frame section 128 substantially the same as the intermediate frame section 124. For example, act 208 may include adjusting the position of the wing frame section 128 until the second angle θ₂ between the wing frame section 128 and the intermediate frame section 124 is substantially the same as the first angle θ₁ between the intermediate frame section 124 and the center frame section 122. In some embodiments, the position of the wing frame section 128 may be adjusted by, for example, causing the second actuator 134 to rotate the wing frame section 128 about the second joint 130 until the second angle θ₂ is substantially the same as the first angle θ₁ (e.g., until the tilt of the wing frame section 128 substantially matches the lift of the frame 120). In some embodiments, the second angle θ₂ is adjusted until the wing frame section 128 is substantially parallel to the center frame section 122.

In some embodiments, act 208 includes adjusting the second actuator 134 by substantially a same percentage of an operating range (e.g., of a travel, of a total displacement) as the first actuator 132 to maintain the tilt of the wing frame section 128 to be substantially the same as the lift of the intermediate frame section 124. By way of non-limiting example, if the first actuator 132 was adjusted by about 25% of the operating range (e.g., of a total displacement) of the first actuator 132 at act 202 (e.g., about 25% from the extended position illustrated in FIG. 1C when the frame 120 is in the extended configuration), the second actuator 134 may be adjusted by about 25% of the operating range (e.g., of a total displacement) of the second actuator 134 at act 208 (e.g., about 25% from the retracted position illustrated in FIG. 1C when the frame 120 is in the extended configuration). For example, act 208 may include adjusting the second actuator 134 such that a ratio of the change of the second actuator 134 (e.g., the ratio of the piston in the cylinder) is substantially the same as the ratio of the change of the first actuator 132.

In some embodiments, the tilt of the wing frame section 128 may be adjusted at substantially the same rate as the lift of the frame 120. For example, act 208 may be performed substantially concurrently with (or immediately after) act 202, such that the tilt of the wing frame section 128 substantially follows the lift of the frame 20 during a lifting or lowering operation.

In some embodiments, folding the frame 120 includes adjusting the height of the frame 120 (e.g., by actuation of the first actuator 132), followed by adjusting the tilt of the wing frame section 128 (e.g., by actuation of the second actuator 134). In some such embodiments, the tilt of the wing frame section 128 may follow the lift of the frame 120. Similarly, when adjusting the frame 120 from a folded configuration to an extended configuration, the lift of the frame 120 may be decreased, followed by adjustment of the tilt of the wing frame section 128 such that the tilt of the wing frame section 128 follows the lift of the frame 120. In other words, in some embodiments, the method 200 includes determining a position of the intermediate frame section 124 relative to the center frame section 122 (e.g., determining the first angle θ₁, and causing the second actuator 134 to change the position of the wing frame section 128 relative to the intermediate frame section 124 until the second angle θ₂ is substantially the same as the first angle θ₁.

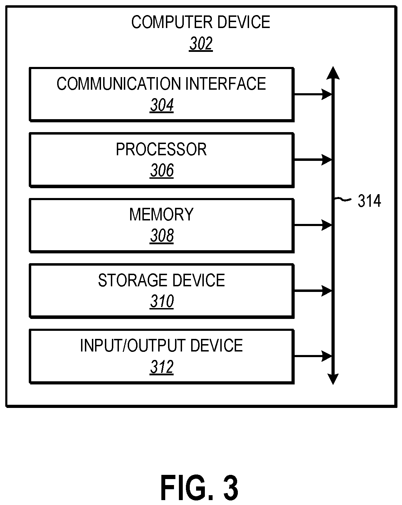

FIG. 3 is a schematic view of a computer device 302. In some embodiments, the control system 114 (FIG. 1A) includes a computer device such as the computer device 302 of FIG. 3. The computer device 302 may include a communication interface 304, at least one processor 306, a memory 308, a storage device 310, an input/output device 312, and a bus 314. The computer device 302 may be used to implement various functions, operations, acts, processes, and/or methods disclosed herein, such as the method 200.

The communication interface 304 may include hardware, software, or both. The communication interface 304 may provide one or more interfaces for communication (such as, for example, packet-based communication) between the computer device 302 and one or more other computing devices or networks (e.g., a server). As an example, and not by way of limitation, the communication interface 304 may include a network interface controller (NIC) or network adapter for communicating with an Ethernet or other wire-based network or a wireless NIC (WNIC) or wireless adapter for communicating with a wireless network, such as a Wi-Fi.

The at least one processor 306 may include hardware for executing instructions, such as those making up a computer program. By way of non-limiting example, to execute instructions, the at least one processor 306 may retrieve (or fetch) the instructions from an internal register, an internal cache, the memory 308, or the storage device 310 and decode and execute them to execute instructions. In some embodiments, the at least one processor 306 includes one or more internal caches for data, instructions, or addresses. The at least one processor 306 may include one or more instruction caches, one or more data caches, and one or more translation look aside buffers (TLBs). Instructions in the instruction caches may be copies of instructions in the memory 308 or the storage device 310.

The memory 308 may be coupled to the at least one processor 306. The memory 308 may be used for storing data, metadata, and programs for execution by the processor(s). The memory 308 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 308 may be internal or distributed memory.

The storage device 310 may include storage for storing data or instructions. As an example, and not by way of limitation, storage device 310 may include a non-transitory storage medium described above. The storage device 310 may include a hard disk drive (HDD), Flash memory, an optical disc, a magneto-optical disc, magnetic tape, or a Universal Serial Bus (USB) drive or a combination of two or more of these. The storage device 310 may include removable or non-removable (or fixed) media, where appropriate. The storage device 310 may be internal or external to the storage device 310. In one or more embodiments, the storage device 310 is non-volatile, solid-state memory. In other embodiments, the storage device 310 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The storage device 310 may include machine-executable code stored thereon. The storage device 310 may include, for example, a non-transitory computer-readable storage medium. The machine-executable code includes information describing functional elements that may be implemented by (e.g., performed by) the at least one processor 306. The at least one processor 306 is adapted to implement (e.g., perform) the functional elements described by the machine-executable code. In some embodiments the at least one processor 306 may be configured to perform the functional elements described by the machine-executable code sequentially, concurrently (e.g., on one or more different hardware platforms), or in one or more parallel process streams.

When implemented by the at least one processor 306, the machine-executable code is configured to adapt the at least one processor 306 to perform operations of embodiments disclosed herein. For example, the machine-executable code may be configured to adapt the at least one processor 306 to perform at least a portion or a totality of the method 200 of FIG. 2. As another example, the machine-executable code may be configured to adapt the at least one processor 306 to perform at least a portion or a totality of the operations discussed for the agricultural implement 104 of FIG. 1A through FIG. 1E. As a specific, non-limiting example, the machine-executable code may be configured to adapt the at least one processor 306 to cause the agricultural implement 104 to fold and/or extend by adjusting the lift of the frame 120 and maintaining the wing frame sections 128 substantially parallel to the center frame section 122 while adjusting the lift of the frame 120. In another non-limiting example, the machine-executable code may be configured to adapt the at least one processor 306 to independently control the first actuator 132 and the second actuator 134.

The input/output device 312 may correspond to the input/output device 116 of FIG. 1A and may allow an operator of the agricultural implement 104 to provide input to, receive output from, the computer device 302. The input/output device 312 may include a mouse, a keypad or a keyboard, a joystick, a touch screen, a camera, an optical scanner, network interface, modem, other known I/O devices, or a combination of such I/O interfaces.

In some embodiments, the bus 314 *(e.g.,* a Controller Area Network (CAN) bus, an ISOBUS (ISO 11783 Compliant Implement Control)) may include hardware, software, or both that couples components of computer device 302 to each other and to external components.

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various machine types and configurations.

## Claims

1. An agricultural implement, comprising:
a center frame section;
an intermediate frame section pivotally coupled to a side of the center frame section;
a wing frame section pivotally coupled to the intermediate frame section;
a first actuator operably coupled to the center frame section and the intermediate frame section;
a second actuator operably coupled to the wing frame section and the intermediate frame section;
a first sensor configured to sense a position of the intermediate frame section relative to the center frame section;
a second sensor configured to sense a position of the wing frame section relative to the intermediate frame section; and
a control system configured to control the first actuator and the second actuator to adjust the position of the intermediate frame section based at least in part on the sensed position of the intermediate frame section relative to the center frame section.

2. The agricultural implement of claim 1, wherein the first sensor comprises a rotary sensor configured to determine an angle between the center frame section and the intermediate frame section; or wherein the first sensor comprises a linear displacement sensor configured to determine a position of the first actuator.

3. The agricultural implement of any one of claims 1 through 2, wherein the control system is configured to cause the second actuator to rotate the wing frame section after causing the first actuator to rotate the intermediate frame section relative to the center frame section.

4. The agricultural implement of any one of claims 1 through 3, wherein:
the first actuator comprises a first hydraulic cylinder; and
the second actuator comprises a second hydraulic cylinder.

5. The agricultural implement of any one of claims 1 through 4, wherein the control system is configured to cause the second actuator to be displaced by a same percentage of a total displacement as the first actuator.

6. The agricultural implement of any one of claims 1 through 5, wherein the control system is configured to maintain the wing frame section substantially parallel to the center frame section by causing the second actuator to rotate the wing frame section relative to the intermediate frame section.

7. The agricultural implement of any one of claims 1 through 6, wherein the control system is configured to independently control the first actuator and the second actuator.

8. The agricultural implement of any one of claims 1 through 7, further comprising:
a center toolbar operably coupled to the center frame section; and
a wing toolbar operably coupled to the wing frame section; optionally
further comprising row units operably coupled to each of the center toolbar and the wing toolbar; and/or wherein the wing toolbar is longer than the wing frame section.

9. The agricultural implement of any one of claims 1 through 8, further comprising:
another intermediate frame section operably coupled to the center frame section;
another wing frame section operably coupled to the another intermediate frame section;
a third actuator operably coupled to the center frame section and the another intermediate frame section and configured to rotate the another intermediate frame section relative to the center frame section; and
a fourth actuator operably coupled to the another intermediate frame section and the another wing frame section and configured to rotate the another wing frame section relative to the another intermediate frame section.

10. A method of operating an agricultural implement, the method comprising:
causing a first actuator to rotate an intermediate frame section relative to a center frame section;
receiving an indication of a position of the intermediate frame section relative to the center frame section with a first sensor;
receiving an indication of a position of a wing frame section relative to the intermediate frame section with a second sensor; and
causing a second actuator to rotate the wing frame section relative to the intermediate frame based on the position of the intermediate frame section relative to the center frame section.

11. The method of claim 10, wherein causing the second actuator to rotate the wing frame section relative to the intermediate frame comprises causing the second actuator to rotate the wing frame section to cause the wing frame section to be substantially parallel to the center frame section.

12. The method of claim 10 or claim 11, wherein receiving an indication of a position of the wing frame section relative to the intermediate frame section with the second sensor comprises receiving an indication of a linear displacement of a piston of the second actuator.

13. The method of any one of claims 10 through 12, wherein causing a second actuator to rotate the wing frame section relative to the intermediate frame section based on the position of the intermediate frame section relative to the center frame section comprises causing the second actuator to be displaced by about a same percentage as the first actuator.

14. The method of any one of claims 10 through 13, wherein causing a first actuator to rotate an intermediate frame section relative to a center frame section comprises causing the first actuator to rotate the intermediate frame section relative to the center frame section independently of the second actuator rotating the wing frame section.

15. A control system for an agricultural implement, the control system comprising:
at least one processor; and
at least one non-transitory computer-readable storage medium storing instructions thereon that, when executed by the at least one processor, cause the control system to:
cause a first actuator to rotate an intermediate frame section relative to a center frame section;
receive, from a first sensor, an indication of a position of the intermediate frame section relative to the center frame section;
receive, from a second sensor, an indication of a position of a wing frame section relative to the intermediate frame section; and
cause a second actuator to rotate the wing frame section relative to the intermediate frame section based on the position of the intermediate frame section relative to the center frame section.
